# FASCICULE DE BREVET EUROPEEN

(11) **EP 1 955 396 B1**
(45) Date de publication et mention de la délivrance du brevet: **15.03.2017**
(21) Numéro de dépôt: 06842051.2
(22) Date de dépôt: 28.11.2006
(51) Int. Cl.: H01M 4/86, H01M 4/88, H01M 8/10, H01M 8/0234, H01M 8/0245, H01M 4/92

(54) **PROCÉDÉ DE FABRICATION, PAR DÉPÔT SUR UN SUPPORT, D'ÉLECTRODE POUR PILE À COMBUSTIBLE**
VERFAHREN ZUR HERSTELLUNG EINER BRENNSTOFFZELLENELEKTRODE EINSCHLIESSLICH ABLAGERUNG AUF EINEM TRÄGER
METHOD FOR PRODUCING A FUEL CELL ELECTRODE, INVOLVING DEPOSITION ON A SUPPORT

(30) Priorité: 30.11.2005 FR 0553668
(43) Date de publication de la demande: 13.08.2008
(73) Titulaire: CNRS, 75794 Paris Cedex 16 (FR); Université d'Orléans, 45067 Orléans Cedex 2 (FR)
(72) Inventeur: BRAULT, Pascal, F-45560 Saint Denis En Val (FR); CAILLARD, Amaël, F-45340 Saint Loup Des Vignes (FR); LECLERC, Alain, F-78800 Houilles (FR)
(74) Mandataire: Ipside
(86) Numéro de dépôt international: PCT/FR2006/051240
(87) Numéro de publication internationale: WO 2007/063244

(56) Documents cités:
- WO-A-03/044240
- WO-A2-01/48839
- DE-A1- 19 914 680
- FR-A- 2 843 896
- US-A- 5 750 013
- ANDREW T. HAUG, RALPH E. WHITE, JOHN W. WEIDNER, WAYNE HUANG, STEVEN SHI, TIMOTHY STONER, NARENDER RANA: "Increasing Proton Exchange Membrane Fuel Cell Catalyst Effectiveness Through Sputter Deposition" JOURNAL OF THE ELECTROCHEMICAL SOCIETY, vol. 149, no. 3, 29 janvier 2002 (2002-01-29), pages A280-A287, XP002398426
- CAILLARD ET AL: "Deposition and diffusion of platinum nanoparticles in porous carbon assisted by plasma sputtering" SURFACE AND COATINGS TECHNOLOGY, ELSEVIER, AMSTERDAM, NL, vol. 200, no. 1-4, 1 octobre 2005 (2005-10-01), pages 391-394, XP005063537 ISSN: 0257-8972
- PASCAL BRAULT: 'Fuel Cell Synthesis by Low Pressure Plasmas' INTERNET ARTICLE, [en ligne] 29 Juin 2006, pages 1 - 43 Séminaire au CRMD, Orléans 29 Juin 2006 : Nanostructures plasma pour les piles à combustible Extrait de l'Internet: <URL:http://pascal.brault.pagesperso-orange .fr/CRMD_Juin2006.pdf>

## Description

La présente invention concerne un procédé de fabrication, par dépôt sur un support, d'électrodes de carbone en vue de réaliser une pile à combustible en couches minces.

Les piles à combustible sont utilisées dans de nombreuses applications, et sont notamment considérées comme une alternative possible à l'utilisation d'énergies fossiles. En effet, ces piles permettent de convertir directement une source d'énergie chimique, par exemple de l'hydrogène, ou de l'éthanol, en énergie électrique.

Une pile à combustible en couches minces est composée d'une membrane (ou électrolyte) conductrice ionique, sur laquelle sont déposées de part et d'autre une anode et une cathode.

Le principe de fonctionnement d'une telle pile est le suivant : on injecte du combustible au niveau de l'anode de la pile. Cette anode va alors être le siège d'une réaction chimique créatrice d'ions positifs, notamment des protons, et d'électrons. Les protons sont, par l'intermédiaire de la membrane, transférés vers la cathode. Les électrons, quant à eux, sont transférés par l'intermédiaire d'un circuit, leur mouvement créant ainsi de l'énergie électrique. Par ailleurs, on injecte à la cathode un oxydant qui va réagir avec les protons.

Les électrodes de piles à combustible sont généralement constituées de carbone ayant été catalysé, par exemple avec du platine.

La technique la plus courante pour réaliser une électrode catalysée consiste à utiliser une encre ou un tissu de carbone, que l'on dépose sur un support, et que l'on recouvre ensuite d'une encre de catalyseur, par exemple une encre de platine.

On peut déposer successivement plusieurs couches de carbone et de catalyseur, afin d'obtenir une électrode plus homogène.

L'inconvénient de ces techniques est que les couches sont relativement épaisses, puisque les techniques connues de dépôt d'encre ne permettent pas de réaliser des couches d'une épaisseur inférieure à une dizaine de micromètres.

Les publications US 5 750 013 A, WO 03/044240 A, FR 2 843 896 A et WO 01/48839 A2, ainsi que la présentation de Pascal Brault "Fuel Cell Synthesis by Low Pressure Plasmas" (séminaire au CRMD, Orléans 29 Juin 2006 : Nanostructures plasma pour les piles à combustible, 29 juin 2006 (2006-06-29), pages 1-43, Extrait de l'Internet: URL:http://pascal.brault.pagesperso-orange.fr/CRMD_Juin2006.pdf) constituent des documents pertinents de l'art antérieur.

L'invention part de la constatation que, lors du fonctionnement d'une pile à combustible, la quantité de catalyseur réellement utile correspond au plus à une épaisseur de quelques micromètres. En outre, cette quantité de catalyseur utile dépend de la densité de courant fournie par la pile.

Il serait donc utile, pour des raisons économiques et environnementales, de pouvoir adapter la quantité de catalyseur au mode de fonctionnement de la pile, de façon à ne déposer que la quantité nécessaire.

L'invention vise à remédier à au moins l'un des inconvénients cités précédemment.

De manière plus précise, l'invention est définie dans la revendication 1.

Les couches de carbone sont constituées d'un empilement non compact de billes de carbone connectées entre elles, de manière à permettre la libre circulation des électrons.

Un tel procédé permet de réaliser les anodes et les cathodes d'une pile à combustible dans une seule et même enceinte à vide, en utilisant un seul et même procédé de dépôt.

Le procédé doit donc être tel qu'il permette de déposer les deux électrodes sur un matériau constituant la membrane de la pile à combustible que l'on souhaite réaliser. A cet effet, on choisit par exemple une température de dépôt qui n'excède pas la température de stabilité de la membrane soit 150 °C maximum. Par ailleurs, la pulvérisation est telle que, durant le dépôt, la membrane n'est pas altérée et ne perd pas ses propriétés de conduction protonique.

Ces dépôts, sur une membrane conductrice ionique, peuvent toutefois être réalisés indépendamment l'un de l'autre, c'est à dire dans deux enceintes différentes.

Ainsi, dans une réalisation, l'électrode est déposée sur une membrane conductrice ionique et isolante électronique, par exemple de type membrane « Nafion ».

De manière générale, la membrane comprend un matériau à squelette carboné avec des terminaisons sulfoniques, et éventuellement de fluor.

De préférence le plasma utilisé est un plasma d'Argon basse pression, la pression variant entre 1 et 500 milli Torr (mT), excité par radio fréquence à une fréquence par exemple égale à 13,56 Mégahertz (MHz), et généré par un générateur de plasma inductif.

La pulvérisation plasma permet de réaliser des couches minces, dans lesquelles le catalyseur a diffusé dans une couche de carbone d'une épaisseur pouvant être supérieure à 1 micromètre.

Par ailleurs, la pulvérisation plasma permet de réaliser des couches de carbone avec différentes morphologies, c'est-à-dire des couches dans lesquelles la taille et la forme des grains de carbone diffèrent. Par exemple, les grains de carbone peuvent être sphériques ou bien en forme de « haricot ». Du fait de ces différentes morphologies, on peut réaliser des couches de carbone plus ou moins poreuses, de façon telle que, dans une réalisation, la porosité du carbone déposé est comprise entre 20% et 50%.

Le procédé défini ci-dessus peut être utilisé pour la réalisation d'électrodes destinées à tout type de pile à combustible, telles que les piles à hydrogène de type PEMFC (Proton Exchange Membrane Fuel Cell) ou à méthanol de type DMFC (Direct Methanol Fuel Cell). Les différents composants, notamment le catalyseur peuvent être de diverse nature. Ainsi, dans une réalisation, le catalyseur pulvérisé est compris dans le groupe comprenant :
- le platine,
- les alliages platinoïdes tels que le platine-ruthénium, le platine-molybdène, le platine-étain,
- des métaux non platinoïdes tels que le fer, le nickel, le cobalt, et
- tout alliage de ces métaux.

Parmi les utilisations les plus courantes, on peut citer l'alliage platine-ruthénium, ou encore l'alliage Platine-Ruthénium-Molybdène.

Ainsi qu'expliqué précédemment, dans une pile à combustible, la réaction chimique ayant lieu à l'anode est une réaction créatrice d'ions. Pour que la pile fonctionne correctement, ces ions doivent être acheminés vers l'anode, ce qui est généralement réalisé grâce à la membrane (électrolyte) qui est réalisée en un matériau conducteur d'ions.

Or, si la phase active catalytique de l'anode a une épaisseur importante, certains ions sont créés à une distance de la membrane telle qu'ils ne peuvent pas être acheminés correctement, puisque le carbone et le catalyseur ne sont pas des matériaux conducteurs d'ions.

De la même manière, dans le cas où la pile à combustible réalisée est telle que la réaction chimique à la cathode crée des ions négatifs, si la phase active catalytique de la cathode a une épaisseur trop importante, certains de ces ions pourront ne pas être acheminés correctement vers la membrane.

Pour remédier à cela, il est utile que, dans une réalisation, le procédé comprenne l'étape de déposer, après au moins un dépôt de catalyseur, un conducteur ionique tel que du « Nafion ». Ainsi, les ions créés dans l'électrode, loin de la membrane, seront acheminés par l'intermédiaire de ce conducteur ionique déposé.

Afin de contrôler au mieux les quantités déposées, dans une réalisation, le dépôt du conducteur ionique est effectué par pulvérisation plasma. Cette pulvérisation est, de préférence, réalisée dans la même enceinte à vide que les pulvérisations de carbone et de catalyseur.

Ainsi qu'expliqué précédemment, dans une pile à combustible, la quantité active de catalyseur varie en fonction de la densité de courant délivré, et donc également en fonction de la puissance de fonctionnement de la pile. Cette variation est due notamment à la compétition entre des phénomènes d'approvisionnement en réactifs et de résistance ionique d'une électrode. Selon le mode de fonctionnement souhaité, il sera utile d'avoir des quantités de catalyseur plus ou moins importantes selon la distance par rapport à la membrane.

Afin de tenir compte de ces variations, le rapport entre le nombre d'atomes de catalyseur et le nombre d'atomes de carbone présents dans les couches successives de carbone catalysé varie selon un profil déterminé.

On peut, par exemple, définir un profil correspondant à la réalisation d'une pile à combustible délivrant un courant relativement élevé, par exemple, un courant supérieur à 800 mA/cm², c'est-à-dire une pile fonctionnant à haute puissance, une puissance étant considérée comme haute à partir de 500 mW/cm².

Dans ce cas, pour créer une grande densité de courant, il faut apporter à l'électrode une grande quantité de combustible. Pour que ce flux important de combustible puisse réagir correctement, il est nécessaire de disposer d'une grande quantité de catalyseur proche de la membrane.

A cet effet, dans une réalisation, pour réaliser une pile à combustible dont la puissance de fonctionnement est supérieure à une valeur déterminée, par exemple 500 mW/cm², on dépose sur la couche de carbone la plus proche de la membrane de la pile à combustible une quantité de catalyseur telle que le rapport entre le nombre d'atomes de catalyseur et le nombre d'atomes de carbone présents dans la couche de carbone catalysé ainsi créée est supérieur à 20%, sur une épaisseur inférieure à 100 nm conduisant à une quantité totale de platine inférieure ou égale à 0.1 mg/cm².

De la même manière, il est possible de définir un profil pour des piles à combustible fonctionnant à faible puissance, c'est-à-dire à une puissance inférieure à 500 mW/cm². Cette pile étant destinée à délivrer un courant relativement faible, il n'est pas nécessaire de disposer d'une grande quantité de catalyseur proche de la membrane. Dans ce cas, l'objectif principal est donc de réduire au maximum la quantité de catalyseur utilisé dans l'ensemble de l'électrode, afin de réduire les coûts.

A cet effet, dans une réalisation, pour réaliser une pile à combustible dont la puissance de fonctionnement est inférieure à une valeur déterminée, par exemple 500 mW/cm², on dépose sur la couche de carbone la plus proche de la membrane de la pile à combustible une quantité de catalyseur telle que le rapport entre le nombre d'atomes de catalyseur et le nombre d'atomes de carbone présents dans la couche de carbone catalysé ainsi créée est inférieur à 20%.

Pour obtenir une pile à combustible dont la puissance est inférieure à une valeur déterminée, par exemple 500 mW/cm², les quantités de catalyseur déposé sont telles que le rapport du nombre d'atomes de catalyseur sur le nombre d'atomes de carbone présents dans la couche de carbone catalysé la plus proche de la membrane de la pile à combustible est plus de 10 fois supérieur au rapport du nombre d'atomes de catalyseur sur le nombre d'atomes de carbone présents dans la couche de carbone catalysé la plus éloignée de cette membrane.

Dans une autre réalisation, le procédé est tel qu'on dépose des couches de carbone poreux ayant toutes la même épaisseur.

D'autres caractéristiques et avantages de l'invention apparaîtront avec la description non limitative de certains de ses modes de réalisation, cette description étant effectuée à l'aide des figures sur lesquelles :
- la figure 1 présente une enceinte à vide permettant de déposer des électrodes selon un procédé conforme à l'invention,
- la figure 2 présente le principe de la pulvérisation plasma utilisée dans un procédé conforme à l'invention,
- la figure 3 montre la structure d'une couche de carbone sur laquelle ont été pulvérisés un catalyseur et un conducteur ionique,
- les figures 4a et 4b représentent deux profils de répartition de catalyseur dans une électrode pour, respectivement, pile à combustible fonctionnant à haute et basse puissance, et
- la figure 5 est un chronogramme montrant les pulvérisations alternées de carbone et de platine dans un procédé conforme à l'invention.

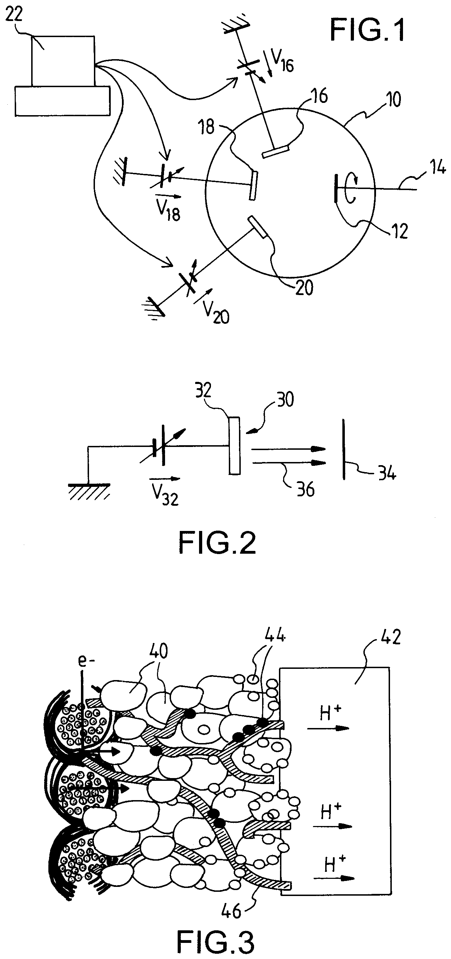

La figure 1 présente une vue en coupe d'une enceinte à vide 10, par exemple de forme générale cylindrique, dans laquelle une électrode est déposée sur un support 12, par exemple une membrane en Nafion. Le support est installé sur un porte-support 14 permettant de faire tourner ce support autour de la normale à sa face principale de manière à déposer de façon uniforme les différentes substances.

Dans cette enceinte se trouvent également trois cibles 16, 18 et 20, respectivement des cibles de carbone poreux, de catalyseur, tel que le platine, et de conducteur ionique, tel que le Nafion. Ces cibles sont polarisées respectivement par des tensions variables V16, V18 et V20. Dans un exemple, une première cible est positionnée en vis-à-vis du support, et les deux autres sont positionnées de part et d'autre de cette première cible, de façon que les normales à leurs faces principales forment chacune un angle inférieur à 45° avec la normale au support.

Afin de réaliser l'électrode, le carbone, le platine et le Nafion sont successivement pulvérisés en utilisant une pulvérisation par plasma basse pression radiofréquence d'Argon. Le principe d'une telle pulvérisation est illustré sur la figure 2. Les ions Argon 30, issus d'un plasma d'argon, sont envoyés sur une cible 32 de matériau à pulvériser sur un support 34. L'état plasma est obtenu par une décharge électrique de forte puissance à travers le gaz d'argon. La cible est polarisée par une tension variable V32. Du fait de l'impact de ces ions 30 sur la cible, les atomes de la cible sont libérés à travers une série de collisions. Ces atomes sont alors projetés (36) sur le support 34.

Dans l'enceinte 10, des ions argon sont en permanence bombardés sur les trois cibles. Les trois cibles sont alors alimentées successivement de manière à déposer sur la membrane 12 une couche de carbone poreux, puis du catalyseur, et enfin du conducteur ionique. Ces trois pulvérisations successives permettent de construire sur le support une couche de carbone catalysé contenant également des atomes de conducteur ionique.

Une telle couche est représentée sur la figure 3. Lors de la première pulvérisation, des billes de carbone poreux, de diamètre généralement compris entre 30 et 100 nm, sont déposées sur un support 42. Au cours d'une deuxième pulvérisation, des billes de platine 44, de diamètre généralement inférieur à 3 nm, sont diffusées dans la couche de carbone et se répartissent donc sur les billes de carbone 40 préalablement déposées. Pour finir, au cours d'une troisième pulvérisation, du conducteur ionique (46), tel que le Nafion, est pulvérisé sur la couche de carbone catalysé.

On réitère alors plusieurs fois l'opération consistant à effectuer ces trois pulvérisations, de manière à construire une électrode de l'épaisseur souhaitée.

On choisit l'épaisseur de chaque couche de carbone poreux de façon qu'elle permette la diffusion du catalyseur déposé ultérieurement, pratiquement dans toute l'épaisseur de cette couche de carbone. L'épaisseur de chaque couche de carbone est de préférence sensiblement inférieure à 1 micromètre.

Pour faciliter la fabrication, les diverses couches de carbone ont de préférence la même épaisseur. Il est cependant possible de réaliser des couches de carbone d'épaisseurs différentes.

Les tensions de polarisation V16, V18 et V20 (figure 1) étant variables, il est possible de contrôler le nombre d'atomes projetés à chaque pulvérisation. Ceci permet de construire des électrodes ayant des profils de répartition du catalyseur dans l'épaisseur que l'on adapte à l'utilisation souhaitée de la pile à combustible.

Si l'on souhaite déposer également un conducteur ionique, pour les raisons évoquées précédemment, ce conducteur doit être réparti de la même façon que le catalyseur pour assurer l'acheminement des protons à la membrane.

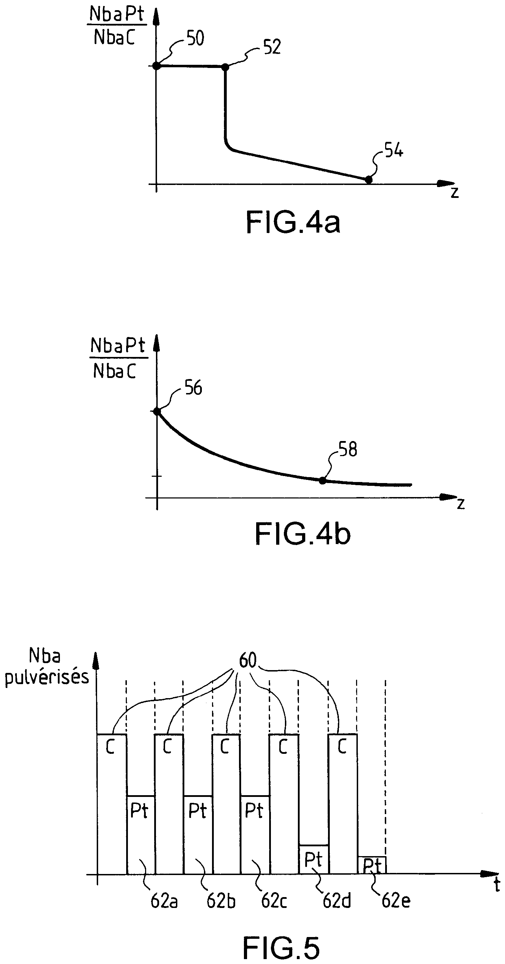

Deux exemples de ces profils sont illustrés sur les figures 4a et 4b. Sur ces deux courbes, l'axe des abscisses représente l'épaisseur de l'électrode, l'abscisse 0 correspondant au point le plus près de la membrane, et l'axe des ordonnées représente le rapport entre le nombre d'atomes de platine et le nombre d'atomes de carbone présents dans l'électrode.

La figure 4a présente un profil d'électrode particulièrement adapté au fonctionnement en haute puissance, c'est-à-dire pour des puissances supérieures à 500 mW/cm².

Au point 50, le rapport entre le nombre d'atomes de platine et le nombre d'atomes de carbone est de 50%, et la quantité de platine est de 10 grammes par centimètre cube. Cette quantité reste constante sur une épaisseur d'environ 0,33 micromètres, jusqu'à atteindre le point de coupure 52. A partir de là, la quantité de platine décroît très rapidement, jusqu'à atteindre une valeur quasiment nulle pour une épaisseur d'électrode égale à 1 micromètre (54).

La figure 4b présente un profil d'électrode particulièrement adapté au fonctionnement en basse puissance, c'est-à-dire pour des puissances inférieures à 500 mW/cm².

Au point 56, le rapport entre le nombre d'atomes de platine et le nombre d'atomes de carbone est de 20%, et la quantité de platine est de 6 grammes par centimètre cube. Cette quantité diminue progressivement jusqu'à atteindre (58) une valeur de 0,6 grammes par centimètre cube, pour une épaisseur inférieure à 1 micromètre, puis elle reste constante jusqu'à atteindre une épaisseur de 2 micromètres au maximum.

Un moyen pour réaliser ces profils est de pulvériser la même quantité de carbone à chaque pulvérisation, et de faire varier la quantité de platine pulvérisé. Un tel séquencement est illustré par le chronogramme de la figure 5.

Sur ce chronogramme, l'axe des abscisses représente le temps, et l'axe des ordonnées représente le nombre d'atomes pulvérisés.

On voit sur ce chronogramme que le nombre d'atomes de carbone poreux pulvérisés à chaque occurrence est le même (60).

En revanche, le nombre d'atomes de platine varie. Dans cet exemple, au cours des trois premières occurrences 62a, 62b, et 62c, le nombre d'atomes de platine pulvérisé est identique pour les trois occurrences. En revanche, ce nombre diminue fortement au cours des occurrences 62d et 62e. Ce chronogramme montre uniquement les premières pulvérisations du dépôt. Par la suite, par exemple, les pulvérisations de carbone restent les mêmes, et les pulvérisations de platine continuent à diminuer.

Le nombre total d'occurrences est généralement compris entre 2 et 20, et le temps nécessaire au dépôt de l'électrode est inférieur à 10 minutes. Dans un exemple, toutes les occurrences ont la même durée, égale à 30 secondes, et on réalise 10 phases de dépôts de carbone et 10 phases de dépôt de catalyseur.

Une électrode déposée en suivant un tel chronogramme a un profil analogue à celui de la figure 4a. En effet, les 3 premières pulvérisations de platine (62a à 62c) correspondent à la portion du profil située entre les points 50 et 52 (figure 4a), alors que les pulvérisations 62d et suivantes correspondent à la portion située entre les points 52 et 54 (figure 4a).

En variante, une (ou plusieurs) pulvérisation(s) de platine peu(ven)t être suivie(s) d'une pulvérisation de conducteur ionique.

Pour réaliser des dépôts d'électrodes selon un chronogramme choisi, on peut par exemple utiliser un ordinateur 22 (figure 1), contenant le chronogramme en mémoire, et utilisé pour commander les tensions variables V16, V18 et V20 de manière à obtenir le profil souhaité.

## Revendications

1. Procédé de fabrication, par dépôt sur une membrane conductrice ionique et isolante électronique (12, 34, 42), d'électrodes de carbone en vue de réaliser une pile à combustible, **caractérisé en ce que**
- le procédé comprend les étapes de déposer par pulvérisation plasma dans une enceinte à vide, du carbone poreux (40) et un catalyseur (44) sur la membrane (12, 34, 42), le catalyseur (44) étant utilisé pour accélérer au moins une des réactions chimiques ayant lieu dans la pile à combustible,
- les étapes de dépôt des couches de carbone poreux (40) et du catalyseur (44) sont effectuées alternativement,
- l'épaisseur de chaque couche de carbone poreux (40) est choisie de telle façon que le catalyseur (44) déposé sur cette couche de carbone soit diffusé dans toute cette couche, créant ainsi une couche de carbone catalysé, et l'épaisseur totale de carbone catalysé dans l'électrode étant au plus égale à 1 micromètre,
- la présence de couches distinctes est due à des pulvérisations successives,
et **en ce que**
les quantités de catalyseur déposé sont telles que le rapport du nombre d'atomes de catalyseur sur le nombre d'atomes de carbone présents dans la couche de carbone catalysé la plus proche de la membrane de la pile à combustible est plus de dix fois supérieur au rapport du nombre d'atomes de catalyseur sur le nombre d'atomes de carbone présents dans la couche de carbone catalysé la plus éloignée de cette membrane.

2. Procédé selon la revendication 1, **caractérisé en ce qu'**il comporte l'étape de déposer du carbone formé de billes de carbone poreux présentant un diamètre compris entre 30 et 100nm et un catalyseur formé de billes de platine de diamètre inférieur à 3nm.

3. Procédé selon la revendication 1 ou 2, dans lequel la porosité du carbone déposé est comprise entre 20% et 50%.

4. Procédé selon l'une des revendications précédentes dans lequel le catalyseur pulvérisé est compris dans le groupe comprenant :
- le platine,
- les alliages platinoïdes tels que le platine-ruthénium, le platine-molybdène, le platine-étain,
- des métaux non platinoïdes tels que le fer, le nickel, le cobalt, et
- tout alliage de ces métaux.

5. Procédé selon l'une des revendications précédentes comprenant en outre l'étape de déposer, après au moins un dépôt de catalyseur, un conducteur ionique (46) tel que du « Nafion ».

6. Procédé selon la revendication 5 dans lequel le dépôt du conducteur ionique est effectué par pulvérisation plasma.

7. Procédé selon l'une des revendications précédentes dans lequel le rapport entre le nombre d'atomes de catalyseur et le nombre d'atomes de carbone présents dans les couches successives de carbone catalysé varie selon un profil déterminé dans l'épaisseur de l'électrode.

8. Procédé selon l'une des revendications précédentes dans lequel, pour réaliser une pile à combustible dont la puissance de fonctionnement est supérieure à une valeur déterminée, par exemple 500 mW/cm², on dépose sur la couche de carbone la plus proche de la membrane de la pile à combustible une quantité de catalyseur telle que le rapport entre le nombre d'atomes de catalyseur et le nombre d'atomes de carbone présents dans la couche de carbone catalysé ainsi créée est supérieur à 20%.

9. Procédé selon l'une des revendications précédentes dans lequel, pour réaliser une pile à combustible dont la puissance de fonctionnement est inférieure à une valeur déterminée, par exemple 500 mW/cm², on dépose sur la couche de carbone la plus proche de la membrane de la pile à combustible une quantité de catalyseur telle que le rapport entre le nombre d'atomes de catalyseur et le nombre d'atomes de carbone présents dans la couche de carbone catalysé ainsi créée est inférieur à 20%.

## Patentansprüche

1. Verfahren zur Herstellung von Kohlenstoff-Elektroden im Hinblick auf die Verwirklichung einer Brennstoffzelle durch Ablagerung auf einer ionenleitfähigen und elektronisch isolierenden Membran (12, 34, 42), **dadurch gekennzeichnet, dass**
- das Verfahren die Schritte des Ablagerns durch Plasmaspritzen in einer Vakuumkammer von porösem Kohlenstoff (40) und einem Katalysator (44) auf der Membran (12, 34, 42) aufweist, wobei der Katalysator (44) verwendet wird, um zumindest einer der chemischen Reaktionen, welche in der Brennstoffzelle stattfinden, zu beschleunigen,
- die Schritte des Ablagerns der Schichten aus porösem Kohlenstoff (40) und des Katalysators (44) im Wechsel durchgeführt werden,
- die Dicke jeder Schicht aus porösem Kohlenstoff (40) in der Weise ausgewählt wird, dass der auf dieser Schicht aus porösem Kohlenstoff abgelagerte Katalysator (44) in dieser ganzen Schicht verteilt wird, so dass eine katalysierte Kohlenstoffschicht gebildet wird, und wobei die Gesamtdicke von katalysiertem Kohlenstoff in der Elektrode größer als 1 Mikrometer ist,
- das Vorhandensein von unterschiedlichen Schichten dem aufeinander folgenden Spritzen geschuldet ist,
und dadurch, dass
die Mengen an abgelagertem Katalysator derartig sind, dass das Verhältnis aus der Anzahl an Katalysatoratomen zu der Anzahl an Kohlenstoffatomen, die in der katalysierten Kohlenstoffschicht, welche der Membran der Brennstoffzelle am nächsten ist, vorhandenen sind, mehr als 10 Mal größer als das Verhältnis aus der Anzahl an Katalysatoratomen zu der Anzahl an Kohlenstoffatomen, die in der katalysierten Kohlenstoffschicht, welche von dieser Membran am weitesten entfernt ist, vorhanden sind.

2. Verfahren nach Anspruch 1, **dadurch gekennzeichnet, dass** es den Schritt des Ablagerns des Kohlenstoffs, welcher von porösen Kohlenstoffkugeln gebildet wird, welche einen Durchmesser aufweisen, der zwischen 30 und 100nm liegt, und eines Katalysators aufweist, welcher von Platinkugeln mit einem Durchmesser von weniger als 3nm gebildet wird.

3. Verfahren nach Anspruch 1 oder 2, bei welchem die Porosität des abgelagerten Kohlenstoffs zwischen 20% und 50% liegt.

4. Verfahren nach einem der vorhergehenden Ansprüche, bei welchem der gespritzte Katalysator in der Gruppe enthalten ist, welche Folgendes aufweist:
- Platin,
- platinhaltige Legierungen, wie beispielsweise Platin-Ruthenium, Platin-Molybdän, Platin-Zinn,
- nicht-platinhaltige Metalle, wie beispielsweise Eisen, Nickel, Kobalt und alle Legierungen dieser Metalle.

5. Verfahren nach einem der vorhergehenden Ansprüche, welches außerdem den Schritt des Ablagerns eines Ionenleiters (46), wie beispielsweise "Nafion", nach zumindest einer Ablagerung von Katalysator aufweist.

6. Verfahren nach Anspruch 5, bei welchem die Ablagerung des Ionenleiters durch Plasmaspritzen erfolgt.

7. Verfahren nach einem der vorhergehenden Ansprüche, bei welchem das Verhältnis aus der Anzahl von Katalysatoratomen zu der Anzahl von Kohlenstoffatomen, die in den aufeinander folgenden katalysierten Kohlenstoffschichten vorhanden sind, gemäß einem festgelegten Profil in der Dicke der Elektrode variiert.

8. Verfahren nach einem der vorhergehenden Ansprüche, bei welchem, um eine Brennstoffzelle zu verwirklichen, deren Betriebsleistung größer als ein festgelegter Wert ist, zum Beispiel 500 mW/cm², auf die der Membran der Brennstoffzelle am nächsten liegende Kohlenstoffschicht eine derartige Menge an Katalysator abgelagert wird, dass das Verhältnis aus der Anzahl an Katalysatoratomen zu der Anzahl an Kohlenstoffatomen, die in der katalysierten Kohlenstoffschicht vorhanden sind, größer als 20% ist.

9. Verfahren nach einem der vorhergehenden Ansprüche, bei welchem, um eine Brennstoffzelle zu verwirklichen, deren Betriebsleistung kleiner als ein festgelegter Wert ist, zum Beispiel 500 mW/cm², auf die der Membran der Brennstoffzelle am nächsten liegende Kohlenstoffschicht eine derartige Menge an Katalysator abgelagert wird, dass das Verhältnis aus der Anzahl an Katalysatoratomen zu der Anzahl an Kohlenstoffatomen, die in der katalysierten Kohlenstoffschicht vorhanden sind, kleiner als 20% ist.

## Claims

1. Process for the manufacture, by deposition on an ion-conducting and electron-insulating membrane (12, 34, 42), of carbon electrodes for the purpose of producing a fuel cell, **characterized in that**:
- the process comprises the stages of depositing, by plasma sputtering in a vacuum chamber, porous carbon (40) and a catalyst (44) on the membrane (12, 34, 42), the catalyst (44) being used to accelerate at least one of the chemical reactions taking place in the fuel cell,
- the stages of deposition of the layers of porous carbon (40) and of the catalyst (44) are carried out alternately,
- the thickness of each layer of porous carbon (40) is chosen so that the catalyst (44) deposited on this layer of carbon is diffused throughout this layer, thus creating a layer of catalysed carbon, and the total thickness of catalysed carbon in the electrode being at most equal to 1 micrometre,
- the presence of separate layers is due to successive sputtering operations,
and **in that**:
the amounts of catalyst deposited are such that the ratio of the number of catalyst atoms to the number of carbon atoms present in the layer of catalysed carbon closest to the membrane of the fuel cell is more than ten times greater than the ratio of the number of catalyst atoms to the number of carbon atoms present in the layer of catalysed carbon furthest from this membrane.

2. Process according to Claim 1, **characterized in that** it comprises the stage of depositing carbon formed of beads of porous carbon exhibiting a diameter of between 30 and 100 nm and a catalyst formed of beads of platinum with a diameter of less than 3 nm.

3. Process according to Claim 1 or 2, in which the porosity of the deposited carbon is between 20% and 50%.

4. Process according to one of the preceding claims, in which the sputtered catalyst is included in the group consisting of:
- platinum,
- platinum-group alloys, such as platinum-ruthenium, platinum-molybdenum or platinum-tin,
- non-platinum-group metals, such as iron, nickel or cobalt, and
- any alloy of these metals.

5. Process according to one of the preceding claims, additionally comprising the stage of depositing, after at least one deposition of catalyst, an ion conductor (46), such as "Nafion".

6. Process according to Claim 5, in which the deposition of the ion conductor is carried out by plasma sputtering.

7. Process according to one of the preceding claims, in which the ratio of the number of catalyst atoms to the number of carbon atoms present in the successive layers of catalysed carbon varies according to a predetermined profile in the thickness of the electrode.

8. Process according to one of the preceding claims, in which, in order to produce a fuel cell having an operating power which is greater than a predetermined value, for example 500 mW/cm², an amount of catalyst is deposited on the layer of carbon closest to the membrane of the fuel cell such that the ratio of the number of catalyst atoms to the number of carbon atoms present in the layer of catalysed carbon thus created is greater than 20%.

9. Process according to one of the preceding claims, in which, in order to produce a fuel cell having an operating power which is less than a predetermined value, for example 500 mW/cm², an amount of catalyst is deposited on the layer of carbon closest to the membrane of the fuel cell such that the ratio of the number of catalyst atoms to the number of carbon atoms present in the layer of catalysed carbon thus created is less than 20%.
